# EUROPÄISCHE PATENTANMELDUNG

(11) **EP 0 582 801 A1**
(43) Veröffentlichungstag der Anmeldung: **16.02.1994**
(21) Anmeldenummer: 93109025.2
(22) Anmeldetag: 04.06.1993
(51) Int. Cl.: H02H 3/24, G06F 1/28

(54) **Schaltungsanordnung zur Spannungsregelung**

(30) Priorität: 31.07.1992 DE 4225414
(71) Anmelder: HAL-Sicherheitstechnik GmbH, D-73733 Esslingen (DE)
(72) Erfinder: Siegwarth, Martin, Dipl.-Ing., W-7300 Esslingen a. N. (DE)
(74) Vertreter: Geyer, Ulrich F., Dr. Dipl.-Phys.

(57) **Zusammenfassung**

Bei einer Schaltungsanordnung mit einem ersten Spannungsregler (2) zur Regelung der Eingangsspannung (U_{V}) auf einen vorgegebenen Wert, und mit einer Ansprechschaltung (5) zur Ermittlung eines Abfalls der Eingangsspannung (U_{V}) unter einen vorgegebenen Wert, werden der Schaltungsaufwand und die Leistungsaufnahme dadurch minimiert, daß die Ansprechschaltung (6) einen mit dem Eingang (1) des ersten Spannungsreglers (2) verbundenen Schalttransistors (6) aufweist, dessen Basis mit dem Ausgang des ersten Spannungsreglers (2) verbunden ist, und der in den nicht leitenden Zustand versetzt wird, wenn die Differenz zwischen der Eingangs- und Ausgangsspannung (U_{V} bzw. U_{S}) des ersten Spannungsreglers (2) unter einen vorgegebenen Spannungswert absinkt. Vorzugsweise ist ein zweiter Spannungsregler (9) zur Spannungsstabilisierung des am Ausgang der Ansprechschaltung (5) auftretenden Signals vorgesehen.

## Beschreibung

Die Erfindung betrifft eine Schaltungsanordnung mit einem Spannungsregler zur Regelung der Eingangsspannung auf einen vorgegebenen Wert und einer Ansprechschaltung zur Ermittlung eines Abfalls der Eingangsspannung unter einen vorgegebenen Wert.

Schaltungsanordnungen in dieser Art zur Feststellung, ob die Versorgungsspannung unter einem vorgegebenen Wert absinkt, sind bekannt. Derartige Schaltungsanordnungen werden beispielsweise bei der Spannungsversorgung mit einer Batterie oder einem Akkumulator verwendet, um das Abfallen der Versorgungsspannung zu ermitteln und gegebenenfalls den Verbraucher, beispielsweise einen Prozessor, abzuschalten. Die herkömmlichen Schaltungen dieser Art, auch als Reset-Schaltungen bezeichnet, nehmen jedoch relativ viel Strom auf und/oder benötigen Einstellelemente für die Ansprechspannung. Dadurch verbraucht sich die Batterie oder der Akkumulator unnötig früh bzw. die Schaltungsanordnung wird aufwendig und teuer.

Die herkömmlichen Schaltungen weisen üblicherweise einen Komparator auf, der die Ist-Spannung mit einer Referenz- oder Soll-Spannung vergleicht und beim Absinken der Ist-Spannung unter die Soll-Spannung ein Signal abgibt. Bei einer Gruppe von Schaltungsanordnungen dieser Art wird die Spannung nach dem Spannungsregler geprüft, während bei einer anderen Gruppe von derartigen Schaltungsanordnungen die Spannung vor dem Spannungsregler geprüft wird.

Der häufigste Fall ist der, bei dem die Spannung nach dem Spannungsregler geprüft wird. Ein typisches Beispiel hierfür ist eine Reset-Schaltung für eine zu prüfende, stabilisierte 5 V-Spannung, bei der die Ansprechspannung 4,5 V beträgt. Bei einer derartigen Schaltungsanordnung sind die Toleranzen der Ausgangsspannung des Spannungsreglers und der Ansprechschaltung jedoch nicht korreliert. Beträgt die Spannungstoleranz des Spannungsreglers und die der Reset-Schaltung beispielsweise jeweils ±0,2 V, so kann die Reset-Schaltung in einem großen Differenzspannungsbereich von 0,1 V (bei einer minimalen Regelspannung von 4,8 V und einer maximalen Ansprechspannung von 4,7 V) und 0,9 V (bei einer maximalen Regelspannung von 5,2 V und einer minimalen Ansprechspannung von 4,3 V) unterhalb der stabilisierten Spannung liegen. Der Toleranzbereich ist also sehr groß.

Insbesondere in Schaltungsanordnungen mit Mikroprozessoren löst das Reset-Signal, d. h. das Signal, welches das Absinken der Versorgungsspannung unter eine vorgegebene Referenzspan- nung anzeigt, einen Vorgang nach Art eines Abschaltprogramms aus, der bzw. das die Mikroprozessorschaltung außer Funktion setzt. Selbstverständlich muß dieser Vorgang bzw. dieses Abschaltprogramm abgeschlossen sein, bevor die Spannung unter die für den Prozessor mindestens erforderliche Spannung absinkt, die üblicherweise 4,5 V beträgt. Um bei kleinen Spannungsdifferenzen zwischen der stabilisierten Spannung und der Abschalt- bzw. Reset-Spannung sicherzustellen, daß für den Abschaltvorgang bzw. das Abschaltprogramm ausreichend Zeit bleibt, sind bei den herkömmlichen Schaltungsanordnungen große Kondensatoren erforderlich, die jedoch bei großen Differenzen zwischen der stabilisierten Spannung und der Abschaltspannung nicht benötigt werden. Dies bedeutet, daß eine derartige Schaltung überdimensionierte Kapazitäten aufweisen oder Schaltungsteile zur Präzisionseinstellung der Spannungen aufweisen muß. Beide Möglichkeiten sind schaltungstechnisch aufwendig und teuer.

Bei den Schaltungsanordnungen der eingangs genannten Art, bei denen die Spannung vor dem Spannungsregler geprüft wird, kann ein Absinken der Versorgungsspannung erkannt werden, so lange die stabilisierte Spannung noch stabil ist. Die zuvor besprochenen Schwierigkeiten bei Schaltungsanordnungen mit Spannungsprüfung nach dem Spannungsregler treten daher hier nicht auf. Der Nachteil von Schaltungsanordnungen mit Spannungsprüfung vor dem Spannungsregler besteht jedoch darin, daß die Schaltschwelle der Reset-Schaltung so eingestellt werden muß, daß sie zuverlässig und sicher über der minimalen Eingangsspannung des Reglers liegt, andererseits jedoch auch nicht wesentlich darüber, da sonst beispielsweise schon bei einem kurzzeitigen, vorübergehenden Absinken der Eingangsspannung, das noch nicht zu einer Reset-Auslösung führen soll, das Reset-Signal erzeugt wird, und darüberhinaus das angeschlossene Gerät schon abschaltet, bevor die Batterien erschöpft sind.

Der Erfindung liegt die Aufgabe zugrunde, eine einfache Schaltungsanordnung ohne die genannten Nachteile herkömmlicher Schaltungsanordnungen zu schaffen, die darüberhinaus schaltungstechnisch einfach und kostengünstig ist und eine sehr geringe Leistungsaufnahme aufweist.

Ausgehend von der eingangs genannten Schaltungsanordnung wird die gestellte Aufgabe durch einen mit dem Eingang des Spannungsreglers verbundenen Schalttransistor gelöst, dessen Basis mit dem Ausgang des Spannungsreglers verbunden ist, und der in den nicht leitenden Zustand versetzt wird, wenn die Differenz zwischen Eingangs- und Ausgangssignal des Spannungsreglers unter die Basisschwellspannung des Transistors absinkt. Die erfindungsgemäße Schaltungsanordnung ist schaltungstechnisch und hinsichtlich der erforderlichen Bauteile äußerst einfach. Darüber hinaus wird durch die Verwendung der erfindungsgemäßen Reset-Schaltung unter Verwendung eines Schalttransistors als Differenzspannungsdetektor kein zusätzlicher Strom verbraucht. Die Reset-Schaltung kommt zwar nicht ohne eigene Leistungsaufnahme auf. Der Strom fließt jedoch im leitenden Zustand, d. h. wenn die Betriebsspannung nicht unter einem vorgegebenen Spannungswert abgesunken ist, zum Ausgang des Spannungsreglers, so daß durch ihn ein entsprechend kleinerer Strom fließt.

Insgesamt tritt bei Normalbetrieb daher kein Leistungsverlust auf.

Vorzugsweise ist der durch die Basis des Schalttransistors fließende Strom mit einem Basiswiderstand begrenzt, der den Basisstrom vorzugsweise auf einen sehr kleinen Wert hält.

Der Schalttransistor ist vorzugsweise ein pnp-Transistor, dessen Emitter mit dem Eingang des Spannungsreglers verbunden ist. Dieser Schalttransistor wirkt daher als Differenzspannungsdetektor. Am Kollektor des pnp Transistors tritt das Signal auf, das dem Absinken der Versorgungspannung unter den vorgegebenen Spannungswert entspricht. Wenn der Schalttransistor der Ansprechschaltung in den nicht leitenden Zustand versetzt worden ist, tritt - wie beschrieben - am Ausgang der Ansprechschaltung, also am Kollektor des pnp-Transistors die Versorgungsspannung auf. Sie ist höher als die stabilisierte Ausgangsspannung des Spannungsreglers und deshalb nicht ohne weiteres in der nachfolgenden Schaltung zu verwenden. Um diese Überspannung auf einen Wert zu begrenzen, der etwa in Höhe der vom Spannungsregler stabilisierten Spannung liegt, ist gemäß einer besonders vorteilhaften Ausführungsform der Erfindung der Ansprechschaltung ein weiterer Spannungsregler nachgeschaltet. Dadurch wird die am Ausgang der Ansprechschaltung liegende Spannung auf einen in der Schaltung zu verarbeitenden Spannungswert begrenzt.

Gemäß einer besonders vorteilhaften Ausführungsform der Erfindung ist der weitere Spannungsregler ein Längsspannungsregler, und insbesondere ein Transistor, vorzugsweise ein npn-Transistor, dessen Kollektor mit dem Kollektor des Schalttransistors der Ansprechschaltung, und dessen Basis über einen weiteren Basiswiderstand mit dem Ausgang des Spannungsreglers verbunden ist.

Gemäß einer weiteren bevorzugten Ausführungsform der Erfindung ist der erste Spannungsregler ein sogenannter "Low-Drop-Regler". Derartige Regler können noch mit einer sehr geringen Differenz, beispielsweise von ca. 0,1 bis 0,4 V zwischen Eingangs- und Ausgangsspannung arbeiten (die üblichen Regler benötigen Spannungsdifferenzen von 1 V bis 2,5 V). Derartige Low-Drop-Regler haben den großen Vorteil, daß sie niedrigere unstabilisierte Versorgungsspannungen erfordern und daher die Leistungsaufnahme entsprechend gering ist. Die mit Low-Drop-Reglern erforderliche unstabilisierte Versorgungsspannung ist um ca. 1 bis 2,5 V niedriger als bei den üblichen Reglern. Bei Einsatz von Low-Drop-Reglern ist die Batterie-Lebensdauer bzw. der Zeitraum, nach dem ein Akkumulator wieder aufgeladen werden muß, wesentlich länger. Darüber hinaus können umweltschonendere Batterien bzw. Akkumulatoren mit niedrigerer Versorgungsspannung eingesetzt werden.

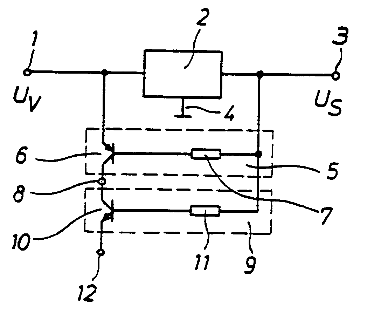

Die Erfindung wird nachfolgend an Hand eines Ausführungsbeispiels unter Bezugnahme auf die einzige Figur erläutert.

Die Figur zeigt eine Ausführungsform der erfindungsgemäßen Schaltungsanordnung in schematischer Darstellung. Am Eingang 1 eines ersten Spannungsreglers 2 liegt die Versorgungsspannung U_{V} an, die der erste Spannungsregler 2 am Ausgang 3 als stabilisierte Spannung U_{S} bereitstellt. Der erste Spannungsregler 2 ist über einen Anschluß 4 mit Masse verbunden.

Der erste Spannungsregler 2 ist als integrierte Schaltung auf dem Markt erhältlich und wird daher nicht weiter erläutert. Eine Ansprechschaltung 5 ist über entsprechende Anschlüsse mit dem Eingang 1 und dem Ausgang 3 des ersten Spannungsreglers 2 verbunden. Bei dem dargestellten Ausführungsbeispiel besteht die Ansprechschaltung 5 aus einem Schalttransistor 6 und einem Basiswiderstand 7. Der Emitter des Schalttransistors 6 ist mit dem Eingang 1 des ersten Spannungsreglers 2 verbunden, während die Basiselektrode des Schalttransistors 6 über einen Basiswiderstand 7 mit dem Ausgang 3 des ersten Spannungsreglers 2 verbunden ist.

Ohne hier auf die an sich bekannte Funktionsweise des ersten Spannungsreglers 2 im einzelnen eingehen zu wollen, sei lediglich erwähnt, daß der erste Spannungsregler 2 bei Vorliegen einer Versorgungsspannung U_{V} an seinem Eingang 1 seinen Innenwiderstand so regelt, daß sich an seinem Ausgang 3 eine Spannung entsprechend den Vorgaben des Reglers einstellt. Beispielsweise ist der Regler für eine stabilisierte Ausgangsspannung von 5 V vorgesehen.

Ist nun die Differenz zwischen der Eingangsspannung, also der Versorgungsspannung U_{V} und der Ausgangsspannung unabhängig vom Absolutwert der Ausgangsspannung größer als der vom Transistor 6 vorgegebene Wert, beispielsweise größer als ca. 0,5 V, fließt ein Strom über die Emitter-Basis-Strecke des Schalttransistors 6 und über den Basistransistor 7 zum Ausgang 3 des ersten Spannungsreglers 2. Der Schalttransistor 6 befindet sich also im leitenden Zustand. Der Basiswiderstand 7 ist dabei derart dimensioniert, daß er den Emitter-Basis-Strom auf einen sehr kleinen Wert begrenzt. Da sich der Schalttransistor 6 im leitenden Zustand befindet, tritt am Ausgang 8 der Ansprechschaltung 5, also am Kollektor des Schalttransistors 6 eine Spannung auf, die, gegen Masse gemessen, im wesentlichen der Versorgungsspannung U_{V} entspricht.

Fällt dagegen die Spannungsdifferenz zwischen der Versorgungsspannung U_{V} am Eingang 1 des ersten Spannungsreglers 2 und der stabilisierten Spannung U_{S} am Ausgang 3 des ersten Spannungsreglers 2 unter den vom Transistor 6 vorgegebenen Spannungswert, beispielsweise unter 0,5 V ab, wird der Schalttransistor 6 in den nicht leitenden Zustand gebracht, da kein Emitter-Basis-Strom mehr durch ihn fließt. Am Ausgang 8 der Ansprechschaltung 5 tritt daher keine Spannung mehr auf. Dieser Zustand ist also der Zustand, bei dem die beispielsweise einen Prozessor umfassende Schaltungsanordnung rückgesetzt wird. Das entsprechende Reset-Signal wird dazu verwendet, den Abschaltvorgang oder ein Abschaltprogramm zu initiieren.

Wie bereits zuvor erläutert wurde, liegt während des Normalbetriebs mit ausreichend hoher Versorgungsspannung U_{V} diese am Ausgang 8 der Ansprechschaltung 5 an, sie ist jedoch höher als die stabilisierte Ausgangsspannung U_{S} des ersten Spannungsreglers 2. Daher kann sie nicht ohne weiteres in nachfolgenden Schaltungen verwendet werden. Um nun diese zu hohe Spannung am Ausgang 8 der Ansprechschaltung 5 auf einen etwa der stabilisierten Spannung U_{S} entsprechenden Wert zu begrenzen, ist ein zweiter Transistor 10 und einer zweiter Basiswiderstand 11 vorgesehen. Der Kollektor des zweiten Transistors 10 ist mit dem Ausgang 8 der Ansprechschaltung 5 bzw. mit dem Kollektor des Schalttransistors 6 der Ansprechschaltung 5 verbunden, während seine Basiselektrode über den zweiten Basiswiderstand 11 ebenfalls mit dem Ausgang 3 des ersten Spannungsreglers 2 in Verbindung steht. Am Ausgang 12 kann die durch den zweiten Transistor 10 begrenzte Spannung, etwa in Höhe der Versorgungsspannung Uₛ, abgegriffen werden.

Der zweite Transistor 10 und der zweite Basiswiderstand 11 arbeiten als Längsspannungsregler 9. Die über den zweiten Basiswiderstand 11 an die Basiselektrode des zweiten Transistors 10 gelegte Spannung erscheint also - um ca. 0,5 V reduziert - am Emitter des zweiten Transistors 10.

Durch die Kombination des ersten Spannungsreglers 2, der Ansprechschaltung 5 und des zweiten Spannungsreglers 9 ergibt sich eine sehr vorteilhafte Gesamtschaltung, die außer dem Verbraucher-Strom, der ohnehin durch den vorhandenen ersten Spannungsregler 2 fließt, und dem Eigenverbrauchsstrom des Spannungsreglers 2, nahezu keinen weiteren Strom aufnimmt, sodaß keine Leistungsverluste entstehen.

## Patentansprüche

1. Schaltungsanordnung mit einem ersten Spannungsregler (2) zur Regelung der Eingangsspannung (Uᵥ) auf einen vorgegebenen Wert und einer Ansprechschaltung (5) zur Ermittlung eines Abfalls der Eingangsspannung (Uᵥ) unter einen vorgegebenen Wert,
dadurch **gekennzeichnet**, daß die Ansprechschaltung (5) einen mit dem Eingang (1) des ersten Spannungsreglers (2) verbundenen Schalttransistor (6) aufweist, dessen Basis mit dem Ausgang (3) des ersten Spannungsreglers (2) verbunden ist, und der in den nicht leitenden Zustand versetzt wird, wenn die Differenz zwischen der Eingangs- und der Ausgangsspannung (U_{V} bzw. U_{S}) des ersten Spannungsreglers (2) unter einen vorgegebenen Spannungswert absinkt.

2. Schaltungsanordnung nach Anspruch 1, dadurch gekennzeichnet, daß der durch die Basiselektrode des Schalttransistors (6) fließende Strom mit einem Basiswiderstand (7) begrenzt ist.

3. Schaltungsanordnung nach Anspruch 1 oder 2, dadurch gekennzeichnet, daß der Schalttransistor (6) ein pnp-Transistor ist, dessen Emitter mit dem Eingang (1) des Spannungsreglers (2) verbunden ist, und an dessen Kollektor (8) das Signal auftritt, das dem Absinken der Versorgungsspannung (U_{V}) unter den vorgegebenen Spannungswert entspricht.

4. Schaltungsanordnung nach einem der vorhergehenden Ansprüche, dadurch gekenzeichnet, daß der Ansprechschaltung (5) ein zweiter Spannungsregler (9) nachgeschaltet ist.

5. Schaltungsanordnung nach Anspruch 4, dadurch gekennzeichnet, daß der zweite Spannungsregler (9) ein Längsspannungsregler ist.

6. Schaltungsanordnung nach Anspruch 4 oder 5, dadurch gekennzeichnet, daß der zweite Spannungsregler (9) ein npn-Transistor ist, dessen Kollektor mit dem Kollektor des Schalttransistors (6) der Ansprechschaltung (5) und dessen Basis über einen zweiten Basiswiderstand (11) mit dem Ausgang des ersten Spannungsreglers (2) verbunden ist.

7. Schaltungsanordnung nach einem der vorhergehenden Ansprüche, dadurch gekennzeichnet, daß der erste Spannungsregler (2) ein Low-Drop-Regler ist.
